# EUROPÄISCHE PATENTSCHRIFT

(11) **EP 2 829 774 B1**
(45) Veröffentlichungstag und Bekanntmachung des Hinweises auf die Patenterteilung: **24.10.2018**
(21) Anmeldenummer: 14178220.1
(22) Anmeldetag: 23.07.2014
(51) Int. Cl.: F16H 63/34, F16H 63/18

(54) **Parksperrenanordnung und Kraftfahrzeuggetriebe**
Parking lock assembly and vehicle transmission
Système de frein de stationnement et boîte de vitesses de véhicule automobile

(30) Priorität: 23.07.2013 DE 102013107860
(43) Veröffentlichungstag der Anmeldung: 28.01.2015
(73) Patentinhaber: GETRAG B.V. & Co. KG, 74199 Untergruppenbach (DE)
(72) Erfinder: Märklen, Michael, 71543 Wüstenrot (DE)
(74) Vertreter: Rausch, Gabriele

(56) Entgegenhaltungen:
- DE-A1- 10 326 118
- JP-A- H1 130 331
- TW-A- 200 819 663

## Beschreibung

Die Erfindung betrifft eine Parksperrenanordnung für ein Kraftfahrzeuggetriebe, mit einer Sperranordnung, die zwischen einer Freigabeposition und einer Sperrposition betätigbar ist, wobei die Sperranordnung dazu ausgebildet ist, in der Sperrposition ein Kraftfahrzeug zu immobilisieren, und mit einer Betätigungsanordnung zum Betätigen der Sperranordnung.
Ferner betrifft die vorliegende Erfindung ein Kraftfahrzeuggetriebe mit einer solchen Parksperrenanordnung.
Parksperrenanordnungen werden in der Regel in Automatikgetrieben, wie Wandlerautomatikgetrieben, automatisierten Schaltgetrieben oder Doppelkupplungsgetrieben verwendet.
Die Sperranordnung einer solchen Parksperrenanordnung beinhaltet häufig ein Parksperrenrad, das eine Verzahnung mit Zähnen und Zahnlücken aufweist. Das Parksperrenrad ist in der Regel an einer Ausgangswelle des Getriebes festgelegt, kann jedoch auch an einem Glied eines Differentials festgelegt sein. Das Parksperrenrad ist folglich direkt mit einem Abtrieb des Kraftfahrzeuges gekoppelt. Ferner beinhaltet eine solche Sperranordnung regelmäßig eine Parksperrenklinke, die einen Klinkenzahn aufweist. Die Parksperrenklinke ist zwischen der Freigabeposition und der Sperrposition verschwenkbar an einem Gehäuse gelagert.
Zum Bewegen der Parksperrenklinke zwischen der Freigabeposition und der Sperrposition sind translatorische Systeme bekannt. Hier beinhaltet die Sperranordnung in der Regel ein Stellglied, das translatorisch versetzbar ist, wobei an dem Stellglied ein Betätigungsglied in Form eines Ziehkeils gelagert ist. Der Ziehkeil stützt sich an dem Gehäuse ab und drückt in einer Längsposition die Parksperrenklinke in Richtung des Parksperrenrades, so dass der Klinkenzahn in eine Zahnlücke des Parksperrenrades eingreift. In einer weiteren Längsposition gibt das Betätigungsglied die Parksperrenklinke frei, so dass diese in die Freigabeposition verschwenken kann. Hier ist es bekannt, eine Haltefeder vorzusehen, die die Parksperrenklinke in die Freigabeposition vorspannt.

Ferner sind rotatorische Systeme zum Bewegen der Parksperrenklinke bekannt. Hierbei ist an einer Welle ein Nocken gelagert, der bei einem Verdrehen der Welle die Parksperrenklinke entweder in die Sperrposition drückt oder diese freigibt.

In manchen Fällen wird die Sperranordnung betätigt, während der Klinkenzahn auf einem Zahn des Parksperrenrades aufliegt. Für diesen Fall ist in der Regel vorgesehen, zwischen dem Stellglied und dem Betätigungsglied eine Federanordnung vorzusehen, die bei der Bewegung des Stellgliedes gespannt wird und Energie speichert, um bei einem Weiterverdrehen des Parksperrenrades dafür zu sorgen, dass das Betätigungsglied weiterbewegt wird und die Parksperrenklinke in die Sperrposition drücken kann.

Generell ist es bekannt, derartige Parksperrenanordnungen manuell zu betätigen, beispielsweise mittels eines Schalthebels im Inneren des Fahrzeuges. Alternativ ist es bekannt, Parksperrenanordnungen mittels eines Aktuators zu betätigen, der als hydraulischer Aktuator, als elektromechanischer Aktuator oder als elektromagnetischer Aktuator ausgebildet sein kann.

Der Aktuator kann entweder translatorisch wirken, wie beispielsweise ein Hydraulikzylinder, oder rotatorisch, wie beispielsweise ein Elektromotor. Häufig beinhalten die Betätigungsanordnungen solcher Parksperrenanordnungen daher Rotations-Translationswandler.

Aus dem Dokument EP 1 865 237 A1 ist eine Parksperrenanordnung für ein Quad bekannt, bei der ein Betätigungsmechanismus einen starr an einer Schaltwalze festgelegten Nocken aufweist. Eine Parksperrenklinke ist als zweiseitiger Hebel ausgebildet, der an einem Ende einen Nockenfolger aufweist und an dem anderen Ende einen Klinkenzahn aufweist, der in der Sperrposition in eine Zahnlücke eines Parksperrenrades greift. Die Parksperrenklinke ist dabei mittels einer Haltefeder in eine Freigabeposition vorgespannt. Eine weitere Federanordnung kann als Energiespeicher für den Fall Zahnauf-Zahn in den Nockenfolger integriert sein.
Das Dokument DE 20 2008 001 760 U1 offenbart eine Parksperrenanordnung mit rotatorischer Betätigung einer Parksperrenklinke, wobei ein verdrehbarer Nocken an einem Klinkenrücken einer Parksperrenklinke angreift. Der Nocken ist an einer Welle gelagert, die mittels eines Betätigungshebels verdrehbar ist. Weitere Parksperrenanordnungen mit rotatorischem Betätigungssystem sind aus der DE 10 2006 043 662 A1 und der DE 2101822 A bekannt.
Ferner offenbart das Dokument DE 10 2010 054 911 A1 eine Parksperrenanordnung, bei der ein Kulissenelement, das als RT-Wandler wirkt, mittels eines Elektromotors und eines Stirnradgetriebes verdreht wird. Das Kulissenelement ist mit einem Ziehkeil einer Sperranordnung verbunden.
Es ist aus dem Dokument US 2,653,689 A bekannt, eine Parksperrenklinke als zweiseitigen Hebel auszubilden, dessen eines Ende einen Klinkenzahn aufweist. Das andere Ende der Parksperrenklinke ist über einen Hebelmechanismus, der zwei weitere Hebel aufweist, mit einer Betätigungsstange verbunden, die wiederum über einen Nocken translatorisch versetzt wird.

Die gattungsgemäße DE 103 26 118 A1 betrifft eine Schaltvorrichtung zur mechanisch kopplungsfreien Übertragung von Schaltbefehlen an ein automatisches Kraftfahrzeuggetriebe, also sogenannte Shift-by-wire-Schaltung, mit mindestens einem Gehäuse und/oder einem Rahmen, einem Wählhebel zur manuellen Anwahl von Schaltbefehlen für das Kraftfahrzeuggetriebe in mindestens einer Schaltgasse, wobei der Wählhebel von Hand zumindest in 4 Positionen, um zumindest eine Schaltachse schwenkbar, führbar ist, mit Übertragungsvorrichtungen zur Übertragung der Schaltbefehle ohne mechanische Kopplung an das Kraftfahrzeuggetriebe.

Vor dem obigen Hintergrund ist es eine Aufgabe der Erfindung, eine verbesserte Parksperrenanordnung sowie ein damit ausgestattetes Kraftfahrzeuggetriebe anzugeben, wobei die Betätigungsanordnung mittels eine rotatorischen Aktuators betätigbar ist, vorzugsweise jedoch nur einen kleinen Winkelbereich des rotatorischen Aktuators für die Parksperrenbetätigung nutzt. Ferner soll es vorzugsweise möglich sein, in dem Fahrzeuggetriebe relativ große Distanzen zwischen einem solchen rotatorischen Aktuator und der Sperranordnung zu überbrücken.

Die obige Aufgabe wird durch eine Parksperrenanordnung gemäß dem unabhängigen Anspruch 1 gelöst, wobei die Betätigungsanordnung ein Gehäuse, eine Kurvenscheibe, die um eine Drehachse herum an dem Gehäuse gelagert und antreibbar ist und die einen Betätigungsabschnitt aufweist, der sich über einen ersten Umfangsbereich der Kurvenscheibe erstreckt, der größer ist als 5° und kleiner ist als 180° und einen Hebel aufweist, der verschwenkbar an dem Gehäuse gelagert ist und der mit der Sperranordnung gekoppelt ist, wobei der Hebel mit einem Mitnehmer verbunden ist, der mit der Kurvenscheibe gekoppelt ist, derart, dass der Mitnehmer bei einer Verdrehung der Kurvenscheibe von dem Betätigungskurvenabschnitt so mitgenommen wird, dass der Hebel verschwenkt wird, um die Sperranordnung zu betätigen.
Die Kurvenscheibe kann beispielsweise mittels eines Elektromotors antreibbar sein. Bevorzugt ist die Kurvenscheibe an einer Schaltwalze festgelegt. Dabei ist gewährleistet, dass nur ein relativ kleiner erster Umfangsbereich der Betätigung der Parksperrenanordnung zugeordnet ist, der kleiner ist als 180°, vorzugsweise kleiner als 90°, und insbesondere kleiner als 30°. Demzufolge kann der restliche Umfangsbereich bei Anbringung der Kurvenscheibe an einer Schaltwalze für andere Funktionen (insbesondere Schaltfunktionen zum Schalten von Gangstufen des Kraftfahrzeuggetriebes) genutzt werden, ohne die Parksperrenanordnung zu beeinflussen.
Durch die Maßnahme, einen Hebel verschwenkbar an dem Gehäuse zu lagern, der über einen Mitnehmer mit der Kurvenscheibe gekoppelt ist, ist es möglich, relativ kleine Verdrehungen der Kurvenscheibe in relativ große translatorische Bewegungen umzusetzen. Hierbei wird der Mitnehmer vorzugsweise im Wesentlichen radial in Bezug auf die Drehachse der Kurvenscheibe versetzt.

Eine Drehachse des Hebels ist dabei vorzugsweise parallel zu einer Drehachse der Kurvenscheibe ausgerichtet.

Folglich kann die Parksperrenanordnung insgesamt kompakt gebaut werden. Über die Kopplung des Hebels mit der Sperranordnung ist es möglich, vergleichsweise große Distanzen zwischen der Kurvenscheibe und der Sperranordnung zu überbrücken.

Die Sperranordnung beinhaltet vorzugsweise ein Parksperrenrad und eine Parksperrenklinke der oben beschriebenen Art. Die Sperranordnung kann dabei ein sich an dem Gehäuse abstützendes Betätigungsglied in Form eines Ziehkeiles aufweisen, der durch eine translatorische Betätigung die Parksperrenklinke betätigt. Alternativ kann die Sperranordnung rotatorisch betätigt werden. Ein Stellglied der Sperranordnung ist hierbei auf geeignete Art und Weise mit dem Hebel gekoppelt.

Die Parksperrenanordnung eignet sich folglich für eine Betätigung mittels eines Aktuators, kann jedoch auch manuell betätigt werden. Während die Verwendung von Schaltwalzen, die in der Regel elektromotorisch angetrieben sind, als Antriebsglied für eine Parksperrenanordnung räumlich nahe an der Sperranordnung angeordnet sind, ermöglicht die vorliegende Erfindung, dass die Sperranordnung relativ weit von einer solchen Schaltwalze angeordnet sein kann.

Die Aufgabe wird somit vollkommen gelöst.

Generell ist es denkbar, dass der Betätigungskurvenabschnitt der Kurvenscheibe als Nockenabschnitt ausgebildet ist. In diesem Fall kann beispielsweise die Betätigungsanordnung dazu verwendet werden, um die Sperranordnung von der Freigabeposition in die Sperranordnung zu bewegen. Für die Bewegung zurück in die Freigabeposition ist die Betätigungsanordnung dabei dann in der Regel in eine Grundposition vorzuspannen.

Erfindungsgemäß ist der Betätigungskurvenabschnitt als Kulissenabschnitt mit einer Kulisse ausgebildet, innerhalb der der Mitnehmer zweiseitig geführt ist, so dass der Hebel zwangsweise in zwei Richtungen verschwenkbar ist.

Dabei kann die Kurvenscheibe dazu verwendet werden, eine Betätigungskraft zum Überführen der Sperrposition bereitzustellen, als auch eine Betätigungskraft zum Überführen der Betätigungsanordnung (und/oder der Sperranordnung) in eine Grundposition bzw. in eine Freigabeposition.

Erfindungsgemäß weist die Kurvenscheibe einen zweiten Umfangsbereich auf, der vorzugsweise größer ist als der erste Umfangsbereich, wobei der zweite Umfangsbereich so ausgestaltet ist, dass der Hebel in einer Grundposition verbleiben kann, wenn sich der Mitnehmer im zweiten Umfangsbereich befindet.
Die Kurvenscheibe ist in diesem zweiten Umfangsbereich vorzugsweise kreisrund ausgebildet, so dass der Mitnehmer bei Verdrehungen der Kurvenscheibe innerhalb des zweiten Umfangsbereiches nicht bewegt wird. Die dabei mittels des Mitnehmers für den Hebel eingereichte Position entspricht dabei vorzugsweise einer Grundposition der Betätigungsanordnung, die der Freigabeposition der Sperranordnung entspricht.

Erfindungsgemäß ist der Mitnehmer innerhalb des zweiten Umfangsbereiches an einem Außenumfang der Kurvenscheibe angeordnet. Hierdurch wird eine einfache Konstruktion realisiert, die kostengünstig herstellbar ist.
Dabei ist es von besonderem Vorzug, wenn der Betätigungskurvenabschnitt benachbart zu dem zweiten Umfangsbereich einen Fangabschnitt aufweist, der sich über den Außenumfang des zweiten Umfangsbereiches heraus erstreckt und eine Ausgangsmündung des Betätigungskurvenabschnittes bildet.

Sofern die Kurvenscheibe folglich so verdreht wird, dass der Mitnehmer in den Bereich der Eingangsmündung des Betätigungskurvenabschnittes gelangt, wird dieser bei einem Weiterdrehen der Kurvenscheibe in den Betätigungskurvenabschnitt hineingezogen, und zwar radial nach innen bezogen auf eine Drehachse der Kurvenscheibe.

Von besonderem Vorzug ist es jedoch, wenn der zweite Umfangsbereich so ausgebildet ist, dass der Hebel in der Grundposition gehalten wird. Durch diese Maßnahme wird erreicht, dass dann, wenn der Mitnehmer in dem zweiten Umfangsbereich angeordnet ist, eine versehentliche Betätigung der Sperranordnung unterbunden werden kann. Hierdurch wird folglich eine Art Arretierung der Parksperrenanordnung innerhalb des zweiten Umfangsbereiches eingerichtet.

Erfindungsgemäß erstreckt sich die Kulisse nach der Art einer Kreissehne als Schlitz in der Kurvenscheibe.

Es ist ferner insgesamt vorteilhaft, wenn der Betätigungskurvenabschnitt einen im Wesentlichen linearen oder bogenförmigen Abschnitt aufweist, der sich in Bezug auf eine Radialrichtung (der Kurvenscheibe) in einem Winkel im Bereich von 15° bis 80° erstreckt, vorzugsweise in einem Bereich von 20° bis 60°.

Insgesamt ist es ferner vorteilhaft, wenn der Betätigungskurvenabschnitt sich um einen Winkelbereich von kleiner 25° erstreckt.

Der Hebel weist in einer bevorzugten Ausführungsform einen Drehpunkt auf, der, in radialer Richtung der Kurvenscheibe gesehen, benachbart zu einem Außenumfang der Kurvenscheibe angeordnet ist.

Hierdurch kann zum einen eine kompakte Bauweise realisiert werden. Zum anderen ist es jedoch möglich, vergleichsweise große Verschwenkbewegungen des Hebels bei Betätigungskurvenabschnitten zu realisieren, die sich nur über einen relativ kleinen ersten Umfangsbereich erstrecken.

Der Drehpunkt ist dabei vorzugsweise auf oder benachbart zu einem Radius in Bezug auf eine Drehachse der Kurvenscheibe angeordnet, der gleich einem Radius des Mitnehmers ist, wenn dieser innerhalb des zweiten Umfangsbereiches an einem Außenumfang der Kurvenscheibe angeordnet ist.

In einer bevorzugten Ausführungsform ist der Hebel als einseitiger Hebel ausgebildet. In diesem Fall kann die Kopplung zu der Sperranordnung radial innerhalb des Mitnehmers (bezogen auf den Drehpunkt des Hebels) angeordnet sein. Bevorzugt ist es jedoch, wenn der Mitnehmer mit dem Hebel an einer Position verbunden ist, die zwischen dem Ende des Hebels (bzw. der Kopplung zur Sperranordnung) und dem Drehpunkt des Hebels angeordnet ist. Bevorzugt ist der Mitnehmer dabei näher an dem Drehpunkt als an dem Ort der Kopplung zu der Sperranordnung angeordnet.

In einer alternativen Ausführungsform ist der Hebel ein zweiseitiger Hebel mit einem ersten Arm und einem zweiten Arm, wobei der Mitnehmer mit dem ersten Arm verbunden ist und wobei der zweite Arm mit der Sperranordnung gekoppelt ist.

Bei beiden Ausführungsformen kann über den Hebel das Übersetzungsverhältnis eingestellt werden, das sich aus dem Verhältnis der Hebellängen ergibt.

Insgesamt ist es vorteilhaft, wenn die Sperranordnung eine um eine Klinkenachse verschwenkbare Parksperrenklinke aufweist, wobei ein Drehpunkt des Hebels näher an der Drehachse der Kurvenscheibe als an der Klinkenachse ist.

Hierbei kann eine relativ große Distanz zwischen dem Hebel beziehungsweise der Kurvenscheibe und der Sperranordnung eingerichtet werden.

Ferner ist es vorteilhaft, wenn der Hebel mit einer Antriebseinrichtung gekoppelt und verschwenkbar ist, um die Sperranordnung zu betätigen.

Der Hebel kann dabei insbesondere ein einseitiger Hebel sein oder ein zweiseitiger Hebel, der an einem Arm mit der Antriebseinrichtung und an anderen Arm mit der Sperranordnung gekoppelt ist.

Erfindungsgemäß ist es vorteilhaft, wenn die Kupplung zwischen dem Hebel und der Sperranordnung durch ein erstes Drehgelenk gebildet ist.
Hierdurch kann die Dreh- bzw. Schwenkbewegung des Hebels in eine im Wesentlichen lineare bzw. translatorische Bewegung für die Sperranordnung umgesetzt werden. Das erste Drehgelenk weist dabei vorzugsweise eine Drehgelenkachse auf, die parallel zu einer Drehachse der Kurvenscheibe und parallel zu einer Drehachse des Hebels ausgerichtet ist.
Ferner ist es insgesamt vorteilhaft, wenn die Sperranordnung ein im Wesentlichen translatorisch versetzbares Übertragungsglied aufweist, das mit dem Hebel über ein erstes Drehgelenk verbunden ist.

Das Übertragungsglied, das beispielsweise aus einem Blech hergestellt sein kann, kann dabei vergleichsweise große Distanzen bis hin zu der eigentlichen Sperranordnung überwinden, also hin zu einer entfernt angeordneten Parksperrenklinke.
An dem anderen axialen Ende des Übertragungsgliedes kann das Übertragungsglied mittels einer Linearführung (beispielsweise in Form eines Langloches an dem Übertragungsglied) in Bezug auf das Gehäuse geführt sein. In einer alternativen Ausführungsform kann das Übertragungsglied an seinem anderen axialen Ende über ein weiteres Drehgelenk mit einem weiteren Glied der Parksperrenanordnung gekoppelt sein.
Ferner ist es insgesamt vorteilhaft, wenn die Sperranordnung ein Stellglied aufweist, das beim Betätigen der Parksperrenanordnung im Wesentlichen rotatorisch oder translatorisch versetzt wird.
Dabei ist es bevorzugt, wenn das Stellglied über ein zweites Drehgelenk mit dem Übertragungsglied verbunden ist.
Bei einem translatorisch versetzbarem Stellglied ist es bevorzugt, wenn das zweite Drehgelenk Relativverdrehungen zwischen dem Stellglied und dem Übertragungsglied in einem Winkelbereich von kleiner 10° aufnimmt. Vorzugsweise sind das Stellglied und das Übertragungsglied dabei zudem annähernd parallel ausgerichtet. Sofern das Stellglied rotatorisch versetzbar ist, beispielsweise nach der Art eines Sperrhebels, wie es in dem Dokument DE 20 2008 001 760 U1 offenbart ist, kann das zweite Drehgelenk auch etwas größere Winkelbereiche von Relativverdrehungen zwischen Stellglied und Übertragungsglied aufnehmen. Bei dieser Variante sind das Stellglied und das Übertragungsglied in einer Grundposition vorzugsweise winklig zueinander angeordnet, und zwar beispielsweise in einem Bereich von 20° bis 170°, insbesondere im Bereich von 70° bis 110°.

In einer alternativen Variante können das Stellglied und das Übertragungsglied einstückig miteinander ausgebildet sein.
Ferner ist es vorteilhaft, wenn an dem Stellglied ein Betätigungsglied begrenzt verschieblich oder verdrehbar gelagert ist, das mit einer Parksperrenklinke der Sperranordnung gekoppelt ist.
Das Betätigungsglied kann dabei eine Keilfläche aufweisen, die sich an einem Gehäuseabschnitt abstützt und nach der Art eines Ziehkeiles an einem Rücken der Parksperrenklinke angreift, um diese beispielsweise von der Freigabeposition in die Sperrposition zu drücken. Alternativ kann das Betätigungsglied als Nocken ausgebildet sein, der begrenzt verdrehbar an einem Stellhebel gelagert ist.
Wie im Stand der Technik kann das Betätigungsglied dabei mit einer Federanordnung gekoppelt sein, die für den Fall des Einlegens der Parksperrenanordnung in einer Lage "Klinkenzahn auf Radzahn" Energie speichert, die dafür sorgt, dass die Parksperrenklinke bei einem Weiterdrehen des Parksperrenrades in eine Zahnlücke eingedrückt wird.
Bei sämtlichen oben beschriebenen Ausführungsformen kann der Mitnehmer starr mit dem Hebel verbunden sein, und kann hierbei insbesondere einstückig mit dem Hebel ausgebildet sein. Alternativ kann der Mitnehmer verdrehbar oder begrenzt verdrehbar an dem Hebel gelagert sein, mit einer Drehachse, die parallel zu einer Drehachse des Hebels ausgerichtet ist. Der Mitnehmer kann kreisförmig ausgebildet sein, kann jedoch auch eine Rautenform haben, insbesondere mit abgerundeten Spitzen.

Ausführungsbeispiele der Erfindung sind in der Zeichnung dargestellt und werden in der nachfolgenden Beschreibung näher erläutert. Es zeigen:
Fig. 1 : eine schematische Darstellung eines Antriebsstranges eines Kraftfahrzeuges mit einer Ausführungsform einer erfindungsgemäßen Parksperrenanordnung in einer Freigabeposition;
Fig. 2 : die Parksperrenanordnung der Fig. 1 in einer Sperrposition;
Fig. 3 : eine radiale Ansicht einer Schaltwalze eines Kraftfahrzeuggetriebes mit einer Betätigungsanordnung einer erfindungsgemäßen Parksperrenanordnung;
Fig. 4 : eine schematische Darstellung einer Ausführungsform einer nicht erfindungsgemäßen Parksperrenanordnung;
Fig. 5 : eine Vorderansicht einer weiteren Ausführungsform einer erfindungsgemäßen Parksperrenanordnung in einer Freigabeposition;
Fig. 6 : eine Rückansicht der Parksperrenanordnung der Fig. 5 in der Freigabeposition;
Fig. 7 : eine Vorderansicht der Parksperrenanordnung der Fig. 5 und 6 in einer Sperrposition;
Fig. 8 : eine Rückansicht der Parksperrenanordnung der Fig. 5 bis 7 in einer Sperrposition; und
Fig. 9 : eine Ausführungsform einer nicht erfindungsgemäßen Parksperrenanordnung in einer Freigabeposition.

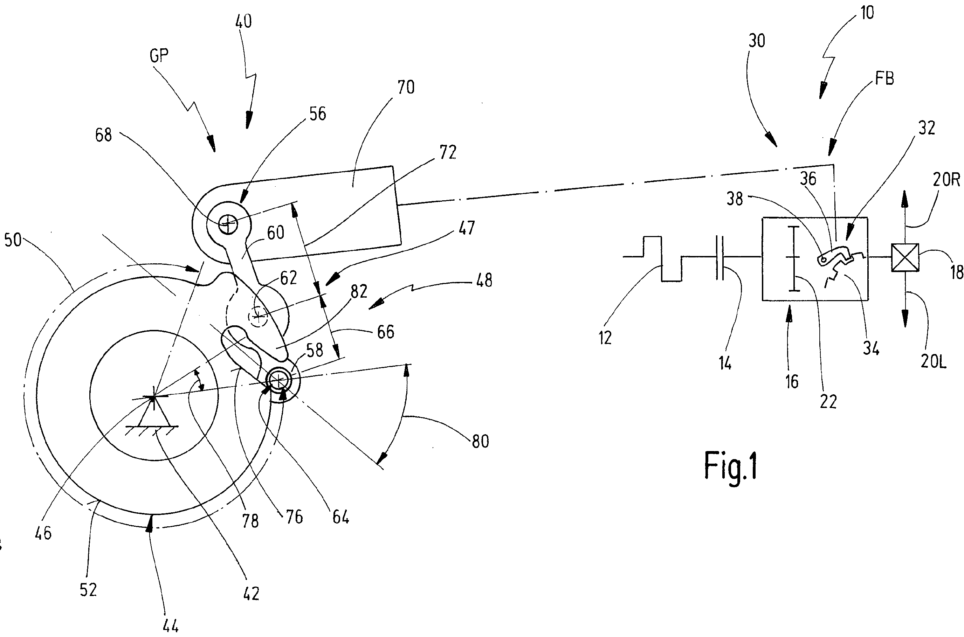

In Fig. 1 ist ein Antriebstrang für ein Kraftfahrzeug schematisch dargestellt und generell mit 10 bezeichnet. Der Antriebsstrang 10 weist einen Antriebsmotor 12 wie einen Verbrennungsmotor, einen Elektromotor oder dergleichen auf. Ferner beinhalt der Antriebsstrang 10 eine Kupplungsanordnung 14 und ein Getriebe 16. Ein Ausgang des Getriebes 16 ist mit einem Differential 18 verbunden, mittels dessen Antriebsleistung auf angetriebene Räder 20L, 20R verteilt wird.

Das Getriebe 16 kann beispielsweise als Vorgelegegetriebe in Stirnbauweise ausgeführt sein und weist Radsätze zum Einrichten von Gangstufen auf, von denen einer bespielhaft bei 22 gezeigt ist. Das Getriebe kann beispielsweise zwei Gangstufen, kann jedoch fünf, sechs, sieben oder mehr Gangstufen aufweisen. Das Getriebe kann insbesondere ein automatisiertes Getriebe wie ein automatisiertes Schaltgetriebe oder ein Doppelkupplungsgetriebe sein. Die Gangstufen können insbesondere mittels einer oder mehrerer Schaltwalzen betätigt werden, wobei im Falle eines Doppelkupplungsgetriebes vorzugsweise jedem Teilgetriebe eine eigene Schaltwalze zugeordnet ist, so dass eine Schaltwalze beispielsweise die Gangstufen 1, 3, 5, 7 bedient, und die andere Schaltwalze die Gangstufen 2, 4, 6. Die Rückwärtsgangstufe ist vorzugsweise der zweiten Schaltwalze zugeordnet. Ferner kann eine der zwei Schaltwalzen, vorzugsweise die Schaltwalze, der auch die Rückwärtsgangstufe zugeordnet ist, dazu verwendet werden, um eine Parksperrenanordnung 30 des Getriebes 16 zu betätigen, so dass eine "Park-by-Wire"-Funktion eingerichtet wird.

Wie es in Fig. 1 schematisch dargestellt ist, beinhaltet die Parksperrenanordnung 30 eine Sperranordnung 32 mit einem Parksperrenrad 34, das beispielsweise an einer Ausgangswelle des Getriebes 16 oder an einem Glied des Differentials 18 festgelegt ist. Ferner beinhaltet die Sperranordnung 32 eine Parksperrenklinke 36, die zwischen einer Freigabeposition und einer Sperrposition verschwenkbar an einem Gehäuse gelagert ist, und zwar um eine Klinkenachse 38 herum. In Fig. 1 ist die Sperranordnung 32 schematisch in einer Freigabeposition FP gezeigt.

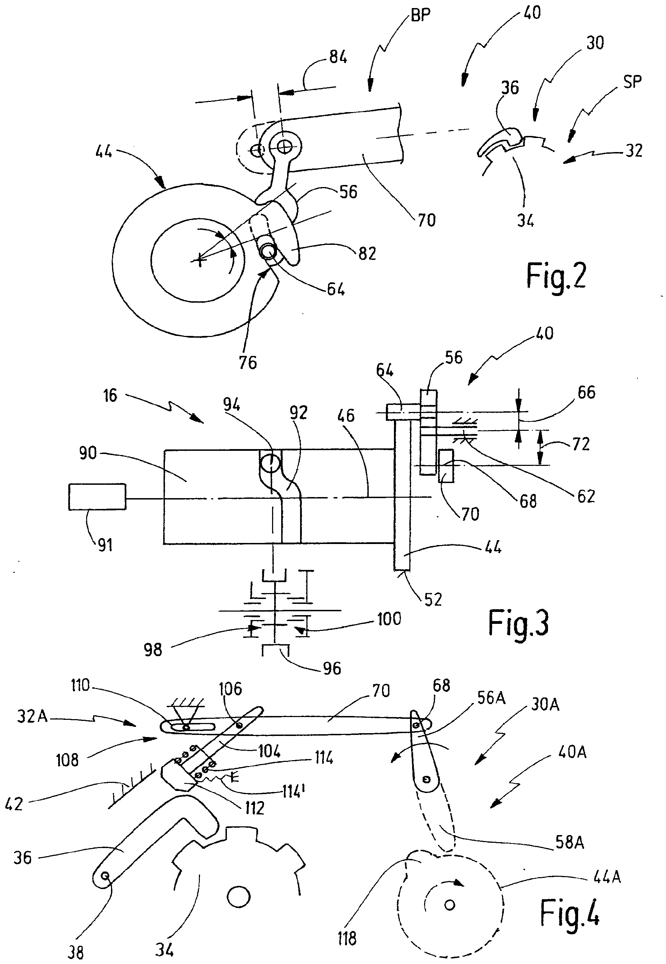

Die Parksperrenanordnung 30 beinhaltet ferner eine Betätigungsanordnung 40, die zwischen einer Betätigungsposition und einer in Fig. 1 dargestellten Grundposition GP bewegbar ist. Die Grundposition GP ist der Freigabeposition FP zugeordnet. Wie es in Fig. 2 gezeigt ist, ist die Betätigungsposition BP der Betätigungsanordnung 40 der Sperrposition SP der Sperranordnung 32 zugeordnet.

Die Betätigungsanordnung 40 beinhaltet ein Gehäuse 42, bei dem es sich beispielsweise um einen Teil eines Gehäuses des Getriebes 16 handeln kann. Ferner weist die Betätigungsanordnung 40 eine Kurvenscheibe 44 auf, die vorliegend als Kulissenscheibe ausgebildet ist. Die Kurvenscheibe 44 ist um eine Drehachse 46 herum verschwenkbar an dem Gehäuse 42 gelagert und ist mittels einer nicht dargestellten Antriebseinrichtung verdrehbar. Die Antriebseinrichtung kann mit einem manuellen Schalthebel gekoppelt sein. Vorzugsweise wird die Kurvenscheibe 44 jedoch mittels eines Elektromotors angetrieben. Besonders bevorzugt ist es, wenn die Kurvenscheibe 44 an einer Schaltwalze festgelegt ist, was nachstehend noch beschrieben werden wird.
An der Kurvenscheibe 44 ist ein Betätigungskurvenabschnitt 47 ausgebildet, der innerhalb eines ersten Umfangsbereiches 48 der Kurvenscheibe 44 angeordnet ist.
Die Kurvenscheibe 44 weist ferner einen zweiten Umfangsbereich 50 auf, der sich vorliegend über wenigstens 270°, insbesondere wenigstens 280° erstreckt. Innerhalb des zweiten Umfangsbereichs 50 weist die Kurvenscheibe 44 einen Außenumfang 52 auf, der einen konstanten Radius besitzt, also an eine Kreisform angenähert ist.
Die Betätigungsanordnung 40 beinhaltet ferner einen Hebel 56, der vorliegend als zweiseitiger Hebel mit einem ersten Arm 58 und einem zweiten Arm 60 ausgebildet ist. Der Hebel 56 ist an dem Gehäuse verschwenkbar gelagert, und zwar an einem Drehpunkt 62. Der Drehpunkt 62 ist, in radialer Richtung der Kurvenscheibe 44 gesehen, benachbart zu dem Außenumfang 52 der Kurvenscheibe 44 angeordnet. Mit anderen Worten ist das Verhältnis des Abstandes des Drehpunktes 62 von der Drehachse 46 zu dem Radius des Außenumfanges 52 vorzugsweise größer als 0,7 und kleiner als 1,5.
Im Bereich des freien Endes des ersten Armes 58 ist an dem ersten Arm 58 ein Mitnehmer 64 ausgebildet, der durch einen sich parallel zu der Drehachse 46 erstreckenden Stift oder Nasenabschnitt ausgebildet sein kann. Der Mitnehmer 64 weist im Querschnitt vorzugsweise eine Kreisform auf.
Eine erste Hebellänge 66 ist durch den Abstand zwischen dem Drehpunkt 62 und dem Mitnehmer 64 definiert.
Der zweite Arm 60 weist im Bereich seines freien Endes ein Drehgelenk 68 auf, über das der Hebel 56 mit einem Übertragungsglied 70 gekoppelt ist. Das Drehgelenk 68 ist nicht in Bezug auf das Gehäuse 42 fixiert. Der Abstand zwischen dem Drehgelenk 68 und dem Drehpunkt 62 definiert eine zweite Hebellänge 72.
Das Verhältnis der ersten Hebellänge 66 zu der zweiten Hebellänge 72 ist vorzugsweise kleiner als 1 und vorzugsweise größer als 0,5.

Der Betätigungskurvenabschnitt 47 ist vorliegend als Kulissenabschnitt mit einer Kulisse 76 ausgebildet, die nach der Art eines sich kreissehnenartig erstreckenden Schlitzes in der Kurvenscheibe 44 ausgebildet ist.

Die Kulisse 76 erstreckt sich in Umfangsrichtung der Kurvenscheibe 44 über einen Winkel 78, der vorzugsweise kleiner ist als 30°, und insbesondere kleiner als 25°. Ferner ist die Kulisse 76 in Bezug auf eine Radialrichtung der Kurvenscheibe 44 unter einem Winkel 80 ausgerichtet, der im Bereich von 15 bis 80° liegen kann, insbesondere im Bereich von 20° bis 60°.

Der Betätigungskurvenabschnitt 47 beinhaltet ferner einen Fangabschnitt 82. Der Fangabschnitt 82 ist durch einen sich im Wesentlichen in tangentialer Richtung erstreckenden Arm ausgebildet, der eine radiale Außenseite der Kulisse 76 bildet und der sich über den Außenumfang 52 des zweiten Umfangsbereiches 50 heraus erstreckt, derart, dass der Fangabschnitt 82 eine Eingangsmündung des Betätigungskurvenabschnittes 47 bildet. Mit anderen Worten wird aus der in Fig. 1 gezeigten Position, bei der der Mitnehmer 64 im Bereich eines Überganges zwischen dem ersten und dem zweiten Umfangsbereich angeordnet ist, bei einem Weiterdrehen der Kurvenscheibe 44 im Uhrzeigersinn von dem Fangabschnitt 82 ergriffen in die Kulisse 76 gezogen, wodurch der Hebel 56 verschwenkt wird, wie es in Fig. 2 dargestellt ist.

Die Kurvenscheibe wird dabei um einen Wert kleiner 25° verdreht, woraus sich jedoch ein vergleichsweise großer Betätigungsweg 84 des Übertragungsgliedes 70 ergibt, der über das Drehgelenk 68 mit dem Hebel 56 gekoppelt ist.

Beim Zurückdrehen der Kurvenscheibe entgegen dem Uhrzeigersinn wird der Mitnehmer über die radial innere Kontur der Kulisse 76 aus der Kulisse herausgedrückt, bis wiederum der in Fig. 1 gezeigte Zustand erreicht ist. Ein Weiterdrehen der Kurvenscheibe 44 entgegen dem Uhrzeigersinn ist über den gesamten zweiten Umfangsbereich 50 möglich, ohne dass der Mitnehmer 64 hierdurch beeinflusst wird. Der Mitnehmer 64 läuft dabei (oder rollt) auf dem Außenumfang 52 der Kurvenscheibe 44 innerhalb des zweiten Umfangsbereiches 50 ab. Folglich verbleibt das Übertragungsglied 70 in der in Fig. 1 gezeigten Grundposition und kann durch die Kopplung zwischen dem Mitnehmer 64 und dem Außenumfang 52 auch nicht in Richtung der in Fig. 2 gezeigten Betätigungsposition BP versetzt werden. Gegebenenfalls kann das Übertragungsglied 70 ferner an einer Bewegung entgegen der Betätigungsrichtung aus der Grundposition GP heraus gehalten werden, mittels eines Anschlages, einer Feder oder dergleichen. Vorzugsweise erfolgt dies über eine Linearführung, wie sie nachstehend noch beschrieben werden wird.
Fig. 3 zeigt in einer radialen Ansicht eine Schaltwalze 90, die mittels eines Elektromotors 91 um eine Drehachse herum verdrehbar ist, die mit der Drehachse 46 der Kurvenscheibe 44 zusammenfällt. Die Kurvenscheibe 44 ist hierbei an der Schaltwalze 90 festgelegt, beispielsweise an einem axialen Ende hiervon.
Die Schaltwalze 90 beinhaltet wenigstens eine Schaltkontur 92, in die ein Finger einer Schaltgabel 94 eingreift. Die Schaltgabel 94 kann dabei mit einer Schaltmuffe 96 gekoppelt sein, die zum Betätigen einer ersten Schaltkupplung 98 und/oder einer zweiten Schaltkupplung 100 dient. Die Schaltkupplungen 98, 100 können beispielsweise dazu verwendet werden, um Losräder jeweiliger Gang-Radsätze des Getriebes 16 drehfest mit einer zugeordneten Welle zu verbinden, um auf diese Weise eine zugeordnete Gangstufe einzulegen.
Fig. 3 zeigt ferner schematisch den Hebel 56 und den Mitnehmer 64, der in der in Fig. 3 gezeigten Darstellung an dem Außenumfang 52 des zweiten Umfangsbereiches 50 anliegt. Ferner sind in Fig. 3 schematisch die Hebellängen 66, 72 gezeigt, sowie das Drehgelenk 68 zur Kopplung mit dem Übertragungsglied 70.

Fig. 4 zeigt eine Ausführungsform einer nicht erfindungsgemäßen Parksperrenanordnung 30A, die hinsichtlich Aufbau und Funktionsweise generell der oben beschriebenen Parksperrenanordnung entsprechen kann. Gleiche Elemente sind daher durch gleiche Bezugszeichen gekennzeichnet. Im Folgenden werden im Wesentlichen die Unterschiede erläutert.

Die Parksperrenanordnung 30A der Fig. 4 weist eine Betätigungsanordnung 40A auf, mit einem Hebel 56A, der beispielsweise als einseitiger Hebel ausgebildet sein kann und der über ein Drehgelenk 68 mit einem Übertragungsglied 70 gekoppelt ist. Der Hebel 56A kann auf beliebige Art und Weise verschwenkt werden, beispielsweise durch einen manuellen Wirkmechanismus oder durch einen Aktuator. Es ist auch möglich, den Hebel 56A als zweiseitigen Hebel mit einem ersten Arm 58A auszubilden, der mit einer Kurvenscheibe 44A zusammenwirkt.
Die Sperranordnung 32A beinhaltet vorliegend ein Stellglied 104, das über ein zweites Drehgelenk 106 mit dem Übertragungsglied 70 gekoppelt ist. Das dem Drehgelenk 68 entgegengesetzte Ende des Übertragungsgliedes 70 ist in einer gehäusefesten Linearführung 108 geführt, beispielsweise mittels eines Längsschlitzes 110 in dem Übertragungsglied 70, wobei ein gehäusefester Stift in den Längsschlitz 110 eingreift.
An dem Stellglied 104 ist ein Betätigungsglied 112 begrenzt verschieblich gelagert. Das Betätigungsglied 112 ist mittels einer Federanordnung 114 mit dem Stellglied gekoppelt (oder über eine Federanordnung 114' mit dem Gehäuse gekoppelt.
Die Federanordnung 114 (oder 114') dient als Energiespeicher beim Einlegen der Parksperrenanordnung in einer Situation "Klinkenzahn auf Parksperrenradzahn".

Wie es in Fig. 4 dargestellt ist, ist das Betätigungsglied 112 als Keilelement ausgebildet, das zum Überführen der Parksperrenanordnung 30A in eine Sperrposition zwischen einen Abschnitt des Gehäuses 42 und einen Rücken der Parksperrenklinke 36 gedrückt werden kann, um die Parksperrenklinke 36 zu verschwenken, damit deren Parksperrenzahn in eine Zahnlücke des Parksperrenrades 34 eingreift.

Es ist zu erkennen, dass durch die Bereitstellung eines Übertragungsgliedes 70, der über ein Drehgelenk 68 mit einem Hebel 56A gekoppelt ist, eine relativ große Distanz zwischen der Betätigungsanordnung 40A und dem Bereich der Parksperrenklinke 36 eingerichtet werden kann.
Fig. 4 zeigt ferner in schematischer Form, dass die Kurvenscheibe 44A anstelle einer Kulisse einen Nocken 118 aufweisen kann, um den Hebel 56A zumindest in einer Richtung zwangsweise zu betätigen, wenn die Kurvenscheibe 44A geeignet verdreht wird.

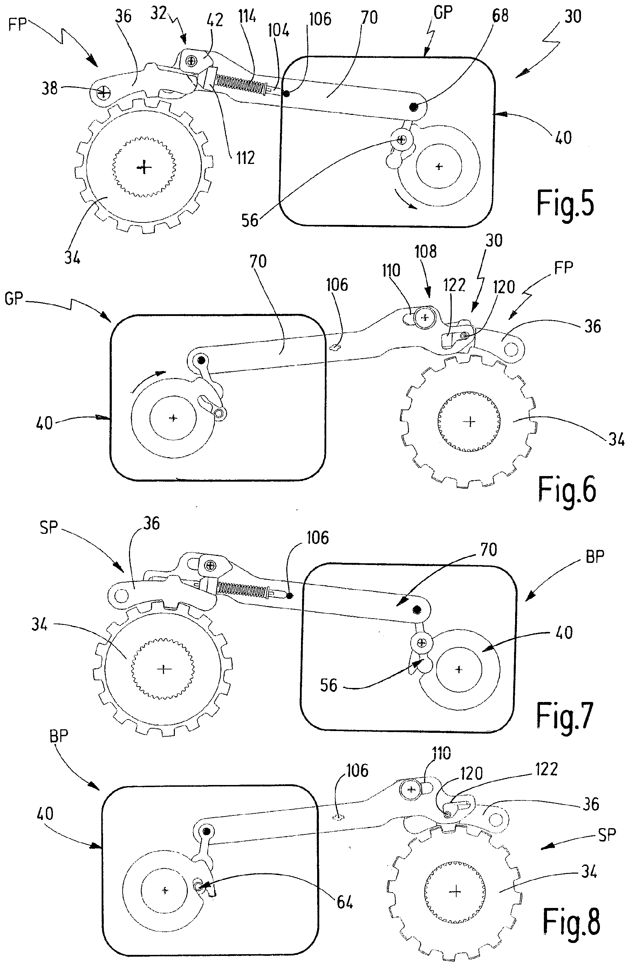

In den Fig. 5 bis 8 ist eine weitere Ausführungsform einer Parksperrenanordnung 30 gezeigt, deren Betätigungsanordnung 40 der Fig. 1 bis 3 entspricht. Die Sperranordnung 32 ist prinzipiell aufgebaut wie die Sperranordnung 32A der Fig. 4 . Gleiche Elemente sind daher durch gleiche Bezugszeichen gekennzeichnet. Im Folgenden werden im Wesentlichen die Unterschiede erläutert. In den Fig. 5 bis 8 , wie auch in den obigen Figuren, bedeutet ein Kreuz eine gehäusefeste Lagerung, während ein schwarzer Kreis ein nichtgehäusefestes Drehgelenk darstellt.
Während bei der Parksperrenanordnung 30A der Fig. 4 das Stellglied 104 unter einem Winkel größer 20° in Bezug auf eine Längserstreckung des Übertragungsgliedes 70 ausgerichtet ist, sind das Stellglied 104 und das Übertragungsglied 70 bei der Ausführungsform der Fig. 5 bis 8 annähernd parallel ausgerichtet. Das zweite Drehgelenk 106 muss nur dazu ausgebildet sein, kleinere Relativwinkel aufzunehmen, da das Übertragungsglied 70 bei einem Verschwenken des Hebels 56 annähernd translatorisch bewegt wird. Durch die annähernd parallele Ausrichtung von Stellglied 104 und Übertragungsglied 70 muss das Drehgelenk 106 ferner keine hohen Kräfte über den gesamten Drehbereich aufnehmen.
Fig. 6, das eine Rückseite der Parksperrenanordnung 30 der Fig. 5 zeigt, lässt erkennen, dass an dem Übertragungsglied 70 eine Klinkenkulisse 122 ausgebildet sein kann, in die ein Klinkenstift 120 greift, der starr mit der Parksperrenklinke 36 verbunden ist und sich in einer Richtung parallel zu der Klinkenachse 38 seitlich von der Parksperrenklinke 36 erstreckt. Die Klinkenkulisse 122 ist so ausgebildet, dass sie die Parksperrenklinke 36 in der in den Fig. 5 und 6 gezeigten Freigabeposition FP formschlüssig hält. Daher ist es nicht notwendig, die Parksperrenklinke 36 in die Freigabeposition FP mittels einer Haltefeder oder dergleichen vorzuspannen.

In den Fig. 7 und 8 ist die Parksperrenanordnung 30 der Fig. 5 und 6 in der Sperrposition SP gezeigt. Die Klinkenkulisse 122 ist dabei so ausgebildet, dass sie eine Verschwenkbewegung der Parksperrenklinke 36 in Richtung hin zu dem Parksperrenrad 34 zulässt. Die Klinkenkulisse 122 weist dabei eine Keilfläche auf, um die Parksperrenklinke aus der in Fig. 8 gezeigten Sperrposition SP wieder in die Freigabeposition FP anzuheben, wenn das Übertragungsglied 70 von der in Fig. 8 gezeigten Betätigungsposition BP in die in Fig. 6 gezeigte Grundposition GP überführt wird.

Bei der oben dargestellten Schaltwalze 90 kann der gesamte zweite Umfangsbereich 50 für Schaltbewegungen genutzt werden. Die Schaltwalze 90 dient vorzugsweise zum Bedienen der Gangstufen 2, 4, 6 und R eines Doppelkupplungsgetriebes.

Bei der erfindungsgemäßen Parksperrenanordnung wird eine Drehbewegung einer Schaltwalze 90 (oder eines Elektromotors oder dergleichen) in eine Linearbewegung umgesetzt, um einen vergleichsweise großen Abstand zwischen diesem Antrieb und dem Parksperrenmechanismus (Parksperrenrad und Parksperrenklinke) zu überbrücken. Dabei wird nur ein vergleichsweise kleiner Winkelbereich der Schaltwalze für das Ein- und Auslegen der Parksperrenanordnung "belegt", so dass ein relativ großer Winkelbereich (zweiter Umfangsbereich 50) für Schaltvorgänge genutzt werden kann, wobei dies keinen Einfluss auf die Parksperrenanordnung hat.

Die Kurvenscheibe 44 kann als eine Scheibe aus Blech ausgebildet sein.

Die Form der Kulisse 76, insbesondere deren Winkel 80 und 78, und die Hebellängen 66, 72 können zur Beeinflussung der Umfangslänge des ersten Umfangsbereiches 48, der Entkopplung und des Übersetzungsverhältnisses verwendet werden.

In manchen Varianten kann beispielsweise bei der Parksperrenanordnung der Fig. 5 bis 8 die Parksperrenklinke mittels einer Feder in die Sperrposition SP vorgespannt sein, wobei die Kraft zum Betätigen der Parksperrenklinke in die Sperrposition durch eine solche Feder unterstützt wird, so dass von der Betätigungsanordnung keine so hohen Kräfte bereitgestellt werden müssen.

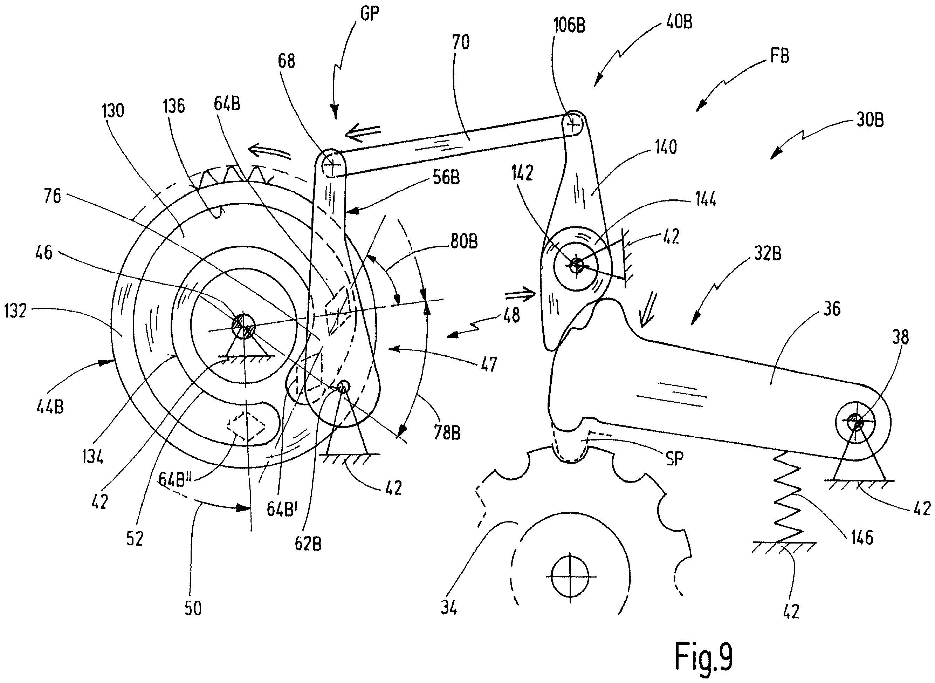

In Fig. 9 ist eine Ausführungsform einer nicht erfindungsgemäßen Parksperrenanordnung 30B gezeigt, die hinsichtlich Aufbau und Funktionsweise generell der oben beschriebenen Parksperrenanordnung 30 entspricht. Gleiche Elemente sind daher durch gleiche Bezugszeichen gekennzeichnet. Im Folgenden werden im Wesentlichen die Unterschiede erläutert.
Die Betätigungsanordnung 40B der Parksperrenanordnung 30B beinhaltet eine Kurvenscheibe 44B, die ebenfalls in einen ersten Umfangsbereich 48 und in einen zweiten Umfangsbereich 50 unterteilt ist, wobei der erste Umfangsbereich 48 sich über einen Winkel 78B erstreckt, und wobei der zweite Umfangsbereich 50 sich daran anschließt und über einen größeren Winkelbereich erstreckt, so wie bei den vorherigen Ausführungsformen. Auch ist der Betätigungskurvenabschnitt 47 hier als Kulissenabschnitt mit einer Kulisse 76 ausgebildet.
Der zweite Umfangsbereich 50 weist hier ebenfalls einen Kulissenabschnitt auf, der sich an die Kulisse 76 in Umfangsrichtung anschließt. Die Kulissenabschnitte sind dabei vorzugsweise durch eine Axialnut 130 ausgebildet, die an der Stirnseite 132 der Kurvenscheibe 44B ausgebildet ist. Die Axialnut 130 weist einen Nutinnenumfang 134 und eine Nutaußenumfang 136 auf, wobei der Mitnehmer 64B in axialer Richtung in die Axialnut 130 eingreift und folglich zwischen dem Nutinnenumfang 134 und dem Nutaußenumfang 136 zweiseitig geführt ist. Bei dieser Ausgestaltung ist ein Fangabschnitt 82 wie bei den vorherigen Ausführungsformen nicht notwendig.
Die Kurvenscheibe 44B kann wie bei den vorherigen Ausführungsformen mit einer Schaltwalze verbunden sein, oder einstückig hiermit ausgebildet sein.
Ferner beinhaltet die Betätigungsanordnung 40 einen Hebel 56B, der vorliegend als einseitiger Hebel ausgebildet ist. Ein Drehpunkt 62B des Hebels 56B ist nahe der Axialnut 130 ausgebildet, und vorzugsweise radial innerhalb eines Außenumfanges der Kurvenscheibe 44B. Der Mitnehmer 64B kann drehbar oder starr mit dem Hebel 56B verbunden sein. Der Mitnehmer 64B kann im Querschnitt kreisförmig ausgebildet sein, kann jedoch auch, wie dargestellt, rautenförmig mit abgerundeten Spitzen ausgebildet sein.
Durch die Rautenform kann insbesondere beim Überführen der Parksperrenanordnung in eine Sperrposition SP eine niedrige Flächenpressung zwischen einer Außenwandung der Kulisse 76 und dem Mitnehmer 64B realisiert werden.
Das Drehgelenk 68 zur drehbaren Kopplung mit dem Übertragungsglied 70 ist im Bereich eines freien Endes des Hebels 56B ausgebildet. Der Mitnehmer 64B ist zwischen dem Drehgelenk 68 und dem Drehpunkt 62B angeordnet.
Diese Art einer Betätigungsanordnung 40B lässt sich auch mit einer translatorischen Sperranordnung 32 kombinieren wie sie in den Fig. 5-8 dargestellt ist. Alternativ kann diese Betätigungsanordnung 40B auch mit einer rotatorischen Sperranordnung 32B kombiniert werden, wie in Fig. 9 gezeigt. Hierbei weist die Sperranordnung 32B einen Sperrhebel 140 auf, der drehbar an einer Sperrhebelachse 142 gelagert ist, auf. Der Sperrhebel 140 ist über ein zweites Drehgelenk 106B mit dem Übertragungsglied 70 gekoppelt. An dem Sperrhebel 140 ist, konzentrisch zu der Sperrhebelachse 142, ein Nocken 144 begrenzt verschwenkbar gelagert, wie es in dem zuvor genannten Dokument DE 20 2008 001 760 U1 beschrieben ist. Dabei kann der Nocken 144, der vorliegend ein Betätigungsglied bildet, mit einer Federanordnung gekoppelt sein, die für den Fall des Einlegens der Parksperrenanordnung in einer Lage "Klinkenzahn auf In Fig. 9 ist ferner gezeigt, dass die Parksperrenklinke 36 bei dieser Ausführungsform mittels einer Feder 146 in die Freigabeposition FP vorgespannt sein kann, die in Fig. 9 in durchgezogenen Linien dargestellt ist. Die Sperrposition SP ist in Fig. 9 gestrichelt dargestellt.
Die Betätigungsanordnung 40 befindet sich in Fig. 9 in einer Grundposition GP. Zum Betätigen der Parksperrenanordnung wird die Kurvenscheibe 44B verdreht, wie es durch einen Doppelpfeil angedeutet ist, bis der Mitnehmer 64B an einem axialen Ende der Kulisse 76 angeordnet ist, wie es bei 64B' dargestellt ist. Hierdurch wird der
Hebel 56B verschwenkt und das Übertragungsglied 70 im Wesentlichen translatorisch versetzt wie es ebenfalls durch einen Pfeil dargestellt ist. Dies wiederum führt zu einer Verschwenkung des Hebels 140 und des Nockens 144, wodurch die Parksperrenklinke 36 in die Sperrposition SP gedrückt wird, wie es ebenfalls durch einen Doppelpfeil angedeutet ist.
Bei 64B" ist gezeigt, dass der Mitnehmer in dem zweiten Umfangsbereich 50 in der Grundposition GP gehalten wird, so dass eine unbeabsichtigte Betätigung der Sperranordnung 32B vermieden wird, wenn der Mitnehmer 64B sich innerhalb des zweiten Umfangsbereiches 50 befindet.
Es versteht sich, dass die weiter oben beschriebenen Betätigungsanordnungen 40 auch zum Betätigen einer Sperranordnung verwendet werden können, wie sie in Fig. 9 bei 32B gezeigt ist.

## Patentansprüche

1. Parksperrenanordnung (30) für ein Kraftfahrzeuggetriebe (16), mit einer Sperranordnung (32), die zwischen einer Freigabeposition (FP) und einer Sperrposition (SP) betätigbar ist, wobei die Sperranordnung (32) dazu ausgebildet ist, in der Sperrposition (SP) ein Kraftfahrzeug zu immobilisieren, und mit einer Betätigungsanordnung (40) zum Betätigen der Sperranordnung, wobei die Betätigungsanordnung aufweist:
- ein Gehäuse (42),
- eine Kurvenscheibe (44), die um eine Drehachse (46) herum an dem Gehäuse (42) gelagert und antreibbar ist, und die einen Betätigungskurvenabschnitt (47) aufweist, der sich über einen ersten Umfangsbereich (48) der Kurvenscheibe (44) erstreckt, der größer ist als 5° und kleiner ist als 180°, und die einen zweiten Umfangsbereich (50) aufweist, und
- einen Hebel (56), der verschwenkbar an dem Gehäuse (42) gelagert ist und mit der Sperranordnung (32) gekoppelt ist, wobei der Hebel (56) mit einem Mitnehmer (64) verbunden ist, der mit der Kurvenscheibe (44) gekoppelt ist, derart, dass der Mitnehmer (64) bei einer Verdrehung der Kurvenscheibe (44) von dem Betätigungskurvenabschnitt (47) so mitgenommen wird, dass der Hebel verschwenkt wird, um die Sperranordnung (32) zu betätigen, wobei der zweite Umfangsbereich (50) so ausgestaltet ist, dass der Hebel (56) in einer Grundposition (GP) verbleiben kann, wenn sich der Mitnehmer in dem zweiten Umfangsbereich (50) befindet, wobei der Betätigungskurvenabschnitt als Kulissenabschnitt mit einer Kulisse (76) ausgebildet ist, innerhalb der der Mitnehmer (64) zweiseitig geführt ist, so dass der Hebel (56) zwangsweise in zwei Richtungen verschwenkbar ist,
**dadurch gekennzeichnet, dass** der Mitnehmer (64) innerhalb des zweiten Umfangsbereiches (50) an einem Außenumfang (52) der Kurvenscheibe (44) angeordnet ist, wobei die Kulisse (76) als sich kreissehnenartig erstreckender Schlitz in der Kurvenscheibe (44) ausgebildet ist.

2. Parksperrenanordnung nach Anspruch 1, **dadurch gekennzeichnet, dass** der Betätigungskurvenabschnitt (47) einen Fangabschnitt (82) aufweist, der durch einen sich in tangentialer Richtung erstreckenden Arm ausgebildet ist, der eine radiale Außenseite der Kulisse (76) bildet und der sich über den Außenumfang (52) des zweiten Umfangsbereiches (50) hinaus erstreckt, derart, dass der Fangabschnitt (82) eine Eingangsmündung des Betätigungskurvenabschnittes (47) bildet.

3. Parksperrenanordnung nach Anspruch 1, **dadurch gekennzeichnet, dass** der zweite Umfangsbereich (50) größer ist als der erste Umfangsbereich (48).

4. Parksperrenanordnung nach Anspruch 3, **dadurch gekennzeichnet, dass** der zweite Umfangsbereich (50) so ausgebildet ist, dass der Hebel (56) in der Grundposition (GP) gehalten wird.

5. Parksperrenanordnung nach einem der Ansprüche 1 - 4, **dadurch gekennzeichnet, dass** der Betätigungskurvenabschnitt (47) einen im wesentlichen linearen oder bogenförmigen Abschnitt aufweist, der sich in Bezug auf eine Radialrichtung in einem Winkel (80) im Bereich von 15° bis 80° erstreckt, vorzugsweise in einem Bereich von 20° bis 60°.

6. Parksperrenanordnung nach einem der Ansprüche 1 - 5, **dadurch gekennzeichnet, dass** der Hebel (56) einen Drehpunkt (62) aufweist, der, in radialer Richtung der Kurvenscheibe (44) gesehen, benachbart zu dem Außenumfang (52) der Kurvenscheibe (44) angeordnet ist.

7. Parksperrenanordnung nach einem der Ansprüche 1 - 6, **dadurch gekennzeichnet, dass** der Hebel ein einseitiger oder ein zweiseitiger Hebel ist.

8. Parksperrenanordnung nach einem der Ansprüche 1 - 7, **dadurch gekennzeichnet, dass** die Sperranordnung (32) eine um eine Klinkenachse (38) verschwenkbare Parksperrenklinke (36) aufweist, wobei ein Drehpunkt (62) des Hebels (56) näher an der Drehachse der Kurvenscheibe (44) als an der Klinkenachse (38) ist.

9. Parksperrenanordnung nach einem der Ansprüche 1 - 8, **dadurch gekennzeichnet, dass** der Hebel (56) mit einer Antriebseinrichtung (90, 91) gekoppelt und verschwenkbar ist, um die Sperranordnung zu betätigen.

10. Parksperrenanordnung nach einem der Ansprüche 1 - 7, **dadurch gekennzeichnet, dass** eine Kopplung zwischen dem Hebel (56) und der Sperranordnung (32) durch ein erstes Drehgelenk (68) gebildet ist.

11. Parksperrenanordnung nach einem der Ansprüche 1 - 9, **dadurch gekennzeichnet, dass** die Sperranordnung (32) ein im Wesentlichen translatorisch versetzbares Übertragungsglied (70) aufweist, das mit dem Hebel (56) über ein erstes Drehgelenk (68) verbunden ist.

12. Parksperrenanordnung nach einem der Ansprüche 1 - 10, **dadurch gekennzeichnet, dass** die Sperranordnung (32) ein Stellglied (104; 140) aufweist, das beim Betätigen der Parksperrenanordnung (30) im Wesentlichen rotatorisch oder translatorisch versetzt wird.

13. Parksperrenanordnung nach Anspruch 11 und nach Anspruch 12, **dadurch gekennzeichnet, dass** das Stellglied (104; 140) über ein zweites Drehgelenk (106) mit dem Übertragungsglied (70) verbunden ist.

14. Parksperrenanordnung nach Anspruch 12 oder 13, **dadurch gekennzeichnet, dass** an dem Stellglied (104) ein Betätigungsglied (112; 144) begrenzt verschieblich oder verdrehbar gelagert ist, das mit einer Parksperrenklinke (36) der Sperranordnung (32) gekoppelt ist.

15. Kraftfahrzeuggetriebe (16) mit einer Parksperrenanordnung nach einem der Ansprüche 1 - 14.

## Claims

1. Parking lock arrangement (30) for a motor vehicle transmission (16), having a blocking arrangement (32), which can be actuated between a release position (FP) and a blocking position (SP), wherein the blocking arrangement (32) is designed to immobilise a motor vehicle in the blocking position (SP), and having an actuating arrangement (40) for actuating the blocking arrangement, wherein the actuating arrangement has:
- a housing (42),
- a cam disc (44), which is supported on the housing (42) and is driveable around an axis of rotation (46) and which has an actuating cam portion (47) that extends over a first circumferential region (48) of the cam disc (44) that is greater than 5° and less than 180°, and which cam disc has a second circumferential region (50), and
- a lever (56), which is supported pivotably on the housing (42) and is coupled to the blocking arrangement (32), wherein the lever (56) is connected to a driving feature (64) that is coupled to the cam disc (44), such that, when the cam disc (44) is rotated, the driving feature (64) is taken along by the actuating cam portion (47) in such a way that the lever is pivoted in order to actuate the blocking arrangement (32), wherein the second circumferential region (50) is configured in such a way that the lever (56) can remain in a home position (GP) when the driving feature is in the second circumferential region (50),
wherein the actuating cam portion is designed as a slotted link portion with a link slot (76), within which the driving feature (64) is guided on two sides, thus allowing the lever (56) to be pivoted positively in two directions, **characterized in that** the driving feature (64) is arranged within the second circumferential region (50) on an outer circumference (52) of the cam disc (44), wherein the link slot (76) is formed in the cam disc (44) as a slot extending in the form of a chord of a circle.

2. Parking lock arrangement according to Claim 1, **characterized in that** the actuating cam portion (47) has a catching portion (82) which is formed by an arm which extends in a tangential direction, forms a radial outer side of the link slot (76) and extends beyond the outer circumference (52) of the second circumferential region (50) in such a way that the catching portion (82) forms an inlet opening of the actuating cam portion (47).

3. Parking lock arrangement according to Claim 1, **characterized in that** the second circumferential region (50) is larger than the first circumferential region (48).

4. Parking lock arrangement according to Claim 3, **characterized in that** the second circumferential region (50) is designed in such a way that the lever (56) is held in the home position (GP).

5. Parking lock arrangement according to one of Claims 1-4, **characterized in that** the actuating cam portion (47) has a substantially linear or arc-shaped portion which extends at an angle (80) in a range of from 15° to 80°, preferably in a range of from 20° to 60°, in relation to a radial direction.

6. Parking lock arrangement according to one of Claims 1-5, **characterized in that** the lever (56) has a fulcrum (62) which is arranged adjacent to an outer circumference (52) of the cam disc (44), when viewed in a radial direction of the cam disc (44).

7. Parking lock arrangement according to one of Claims 1-6, **characterized in that** the lever is a second-class or a first-class lever.

8. Parking lock arrangement according to one of Claims 1-7, **characterized in that** the blocking arrangement (32) has a parking lock pawl (36) which can be pivoted about a pawl axis (38), wherein a fulcrum (62) of the lever (56) is closer to the axis of rotation of the cam disc (44) than to the pawl axis (38).

9. Parking lock arrangement according to one of Claims 1- 8, **characterized in that** the lever (56) is coupled to and can be pivoted by a driving device (90, 91) in order to actuate the blocking arrangement.

10. Parking lock arrangement according to one of Claims 1-7, **characterized in that** a coupling between the lever (56) and the blocking arrangement (32) is formed by a first pivot joint (68).

11. Parking lock arrangement according to one of Claims 1- 9, **characterized in that** the blocking arrangement (32) has a transmission member (70) which can be moved substantially in translation and is connected to the lever (56) by a first pivot joint (68).

12. Parking lock arrangement according to one of Claims 1- 10, **characterized in that** the blocking arrangement (32) has a control member (104; 140), which is moved substantially in rotation or translation during the actuation of the parking lock arrangement (30).

13. Parking lock arrangement according to Claim 11 and according to Claim 12, **characterized in that** the control member (104; 140) is connected to the transmission member (70) by a second pivot joint (106).

14. Parking lock arrangement according to Claim 12 or 13, **characterized in that** an actuating member (112; 144), which is coupled to a parking lock pawl (36) of the blocking arrangement (32), is supported with a limited ability for translation or rotation on the control member (104).

15. Motor vehicle transmission (16) having a parking lock arrangement according to one of Claims 1-14.

## Revendications

1. Système de frein de stationnement (30) pour une boîte de vitesses de véhicule automobile (16), avec un système de frein (32), qui peut être actionné entre une position de libération (FP) et une position de blocage (SP), dans lequel le système de frein (32) est configuré pour, dans la position de blocage (SP), immobiliser un véhicule automobile, et avec un système d'actionnement (40) pour actionner le système de frein, dans lequel le système d'actionnement présente:
- un boîtier (42),
- une came (44), qui est montée et peut être entraînée autour d'un axe de rotation (46) sur le boîtier (42), et qui présente une partie de came d'actionnement (47), qui s'étend sur une première zone périphérique (48) de la came (44), qui est supérieure à 5° et inférieure à 180°, et qui présente une seconde zone périphérique (50), et
- un levier (56), qui est monté de façon pivotante sur le boîtier (42) et qui est couplé au système de frein (32), dans lequel le levier (56) est relié à un élément d'entraînement (64) qui est couplé à la came (44), de telle manière que l'élément d'entraînement (64) soit entraîné par la partie de came d'actionnement (47), lors d'une rotation de la came (44), de telle manière que le levier pivote afin d'actionner le système de frein (32), dans lequel la seconde zone périphérique (50) est configurée de telle manière que le levier (56) puisse rester dans une position de base (GP), lorsque l'élément d'entraînement se trouve dans la seconde zone périphérique (50), dans lequel la partie de came d'actionnement est réalisée sous la forme d'une partie de coulisse avec une coulisse (76), à l'intérieur de laquelle l'élément d'entraînement (64) est guidé sur deux côtés, de telle manière que le levier (56) puisse pivoter obligatoirement dans deux directions, **caractérisé en ce que** l'élément d'entraînement (64) est disposé à l'intérieur de la seconde zone périphérique (50) sur une périphérie extérieure (52) de la came (44), dans lequel la coulisse (76) est réalisée dans la came (44) sous la forme d'une fente s'étendant à la manière d'une corde de cercle.

2. Système de frein de stationnement selon la revendication 1, **caractérisé en ce que** la partie de came d'actionnement (47) présente une partie de saisie (82), qui est formée par un bras s'étendant en direction tangentielle, qui forme un côté radialement extérieur de la coulisse (76) et qui s'étend au-delà de la périphérie extérieure (52) de la seconde zone périphérique (50), de telle manière que la partie de saisie (82) forme une ouverture d'entrée de la partie de came d'actionnement (47).

3. Système de frein de stationnement selon la revendication 1, **caractérisé en ce que** la seconde zone périphérique (50) est plus grande que la première zone périphérique (48).

4. Système de frein de stationnement selon la revendication 3, **caractérisé en ce que** la seconde zone périphérique (50) est configurée de telle manière que le levier (56) soit maintenu dans la position de base (GP).

5. Système de frein de stationnement selon l'une quelconque des revendications 1 à 4, **caractérisé en ce que** la partie de came d'actionnement (47) présente une partie essentiellement linéaire ou en forme d'arc, qui s'étend par rapport à une direction radiale sur un angle (80) dans la plage de 15° à 80°, de préférence dans une plage de 20° à 60°.

6. Système de frein de stationnement selon l'une quelconque des revendications 1 à 5, **caractérisé en ce que** le levier (56) présente un point de rotation (62) qui, vu dans la direction radiale de la came (44), est disposé à proximité de la périphérie extérieure (52) de la came (44).

7. Système de frein de stationnement selon l'une quelconque des revendications 1 à 6, **caractérisé en ce que** le levier est un levier unilatéral ou un levier bilatéral.

8. Système de frein de stationnement selon l'une quelconque des revendications 1 à 7, **caractérisé en ce que** le système de frein (32) présente un cliquet de frein de stationnement (36) pouvant pivoter autour d'un axe de cliquet (38), dans lequel le point de rotation (62) du levier (56) est plus proche de l'axe de rotation de la came (44) que de l'axe de cliquet (38).

9. Système de frein de stationnement selon l'une quelconque des revendications 1 à 8, **caractérisé en ce que** le levier (56) est couplé à un dispositif d'entraînement (90, 91) et peut pivoter, pour actionner le système de frein.

10. Système de frein de stationnement selon l'une quelconque des revendications 1 à 7, **caractérisé en ce qu'**un couplage entre le levier (56) et le système de frein (32) est formé par un premier pivot (68).

11. Système de frein de stationnement selon l'une quelconque des revendications 1 à 9, **caractérisé en ce que** le système de frein (32) présente un organe de transmission déplaçable essentiellement en translation (70), qui est relié au levier (56) par un premier pivot (68).

12. Système de frein de stationnement selon l'une quelconque des revendications 1 à 10, **caractérisé en ce que** le système de frein (32) présente un organe de réglage (104; 140), que l'on déplace essentiellement en rotation ou en translation lors de l'actionnement du système de frein de stationnement (30).

13. Système de frein de stationnement selon la revendication 11 et selon la revendication 12, **caractérisé en ce que** l'organe de réglage (104; 140) est relié au premier organe de transmission (70) par un second pivot (106).

14. Système de frein de stationnement selon la revendication 12 ou 13, **caractérisé en ce qu'**un organe d'actionnement (112; 144), qui est couplé à un cliquet de frein de stationnement (36) du système de frein (32), est monté de façon déplaçable ou rotative limitée sur l'organe de réglage (104).

15. Boîte de vitesses de véhicule automobile (16) avec un système de frein de stationnement selon l'une quelconque des revendications 1 à 14.
